# EUROPEAN PATENT SPECIFICATION

(11) **EP 4 400 696 B1**
(45) Date of publication and mention of the grant of the patent: **25.02.2026**
(21) Application number: 23151338.3
(22) Date of filing: 12.01.2023
(51) Int. Cl.: F01M 13/04, F01M 11/10, F01M 13/02, F01M 13/00

(54) **METHOD OF ESTIMATING AN OPERATIONAL ASPECT OF AN ENGINE, COMPUTER PROGRAM, COMPUTER-READABLE MEDIUM, CONTROL ARRANGEMENT, ENGINE, AND VEHICLE**
VERFAHREN ZUR SCHÄTZUNG EINES BETRIEBSASPEKTS EINES MOTORS, COMPUTERPROGRAMM, COMPUTERLESBARES MEDIUM, STEUERANORDNUNG, MOTOR UND FAHRZEUG
PROCÉDÉ D'ESTIMATION D'UN ASPECT OPÉRATIONNEL D'UN MOTEUR, PROGRAMME INFORMATIQUE, SUPPORT LISIBLE PAR ORDINATEUR, AGENCEMENT DE COMMANDE, MOTEUR ET VÉHICULE

(43) Date of publication of application: 17.07.2024
(73) Proprietor: Scania CV AB, 151 87 Södertälje (SE)
(72) Inventor: JOHANSSON, Linus, 647 35 Mariefred (SE); ÖGREN, Carl, 151 73 Södertälje (SE)
(74) Representative: Scania CV AB

(56) References cited:
- EP-A1- 2 166 202
- EP-A1- 2 614 228
- EP-A2- 2 039 896
- US-A1- 2004 112 346
- US-A1- 2022 165 105

## Description

### TECHNICAL FIELD

The present disclosure relates to a method of estimating an operational aspect of an internal combustion engine. The present disclosure further relates to a computer program, a computer-readable medium, a control arrangement for estimating an operational aspect of an internal combustion engine, an internal combustion engine, and a vehicle comprising an internal combustion engine.

### BACKGROUND

Internal combustion engines are used in some vehicles to provide motive power to the vehicle. Internal combustion engines, such as four-stroke internal combustion engines, typically comprise a number of cylinders and a piston arranged in each cylinder. The piston normally comprises one or more piston rings configured to seal a space between a mantle surface of the piston and a cylinder wall of a cylinder in which the piston is arranged.

The pistons are connected to a crankshaft of the engine and are arranged to reciprocate within the cylinders upon rotation of the crankshaft. The engine usually further comprises one or more inlet valves and outlet valves per cylinder as well as one or more fuel supply arrangements for supplying fuel to the cylinders. The one or more inlet valves and outlet valves are controlled by a respective valve control arrangement usually comprising one or more camshafts rotatably connected to a crankshaft of the engine, via a belt, chain, gears, or similar. A four-stroke internal combustion engine completes four separate strokes while turning a crankshaft. A stroke refers to the full travel of the piston along the cylinder, in either direction.

The strokes are completed in the following order, inlet stroke, compression stroke, expansion stroke and exhaust stroke. During operation of a conventional four-stroke internal combustion engine, the inlet valve control arrangement controls inlet valves of a cylinder to an open state during the inlet stroke of a piston within the cylinder, to allow air, or a mixture of air and fuel, to enter the cylinder. During the compression stroke, all valves should be closed to allow compression of the air, or the mixture of the air and fuel, in the cylinder. If the engine is in a power producing state, fuel in the cylinder is ignited, usually towards the end of the compression stroke, for example by a spark plug or by compression heat in the cylinder.

The combustion of fuel within the cylinder significantly increases pressure and temperature in the cylinder. The combustion of the fuel usually continues into a significant portion of the subsequent expansion stroke. The increased pressure and temperature in the cylinder obtained by the combustion is partially converted into mechanical work supplied to the crank shaft during the expansion stroke. The expansion stroke is also usually referred to as the combustion stroke, since usually, most of the combustion takes place during the expansion stroke. In the subsequent exhaust stroke, the exhaust valve control arrangement controls exhaust valves of the cylinder to an open state to allow exhaust gases to be expelled out of the cylinder into an exhaust system of the combustion engine.

Air inlet charging systems, such as turbocharger systems, are used on internal combustion engines to increase the performance and/or the fuel efficiency of the engine. A turbocharger system comprises a turbine unit and a compressor unit, wherein the turbine unit is driven by exhaust gas of the engine to power the compressor unit. The compressor unit forces air to an air inlet of the engine which allows more fuel to be added and hence higher power output of the engine. A turbocharger is an efficient means of supercharging an engine since it utilizes energy of the exhaust gasses of the engine to compress the inlet air of the engine.

During operation of an internal combustion engine, some gas will leak through the space between the mantle surfaces of the pistons and the cylinder walls of the cylinders into a crankcase of the internal combustion engine. Such leakage of gas is especially prone to appear in the expansion strokes of the pistons but can also appear during other strokes, such as compression strokes of the pistons. Such gas is commonly referred to as blow-by gas. The blow-by gas normally comprises a mixture of air, burned and unburned gases, particles, oil droplets, and combustion residues. Gas can also leak into the crankcase of an internal combustion engine from other sources, for example from an air inlet charging system, such as a turbocharger system, valve systems, air compressor systems, and the like.

In order to avoid too high pressures in a crankcase volume of the crankcase, internal combustion engines are provided with a crankcase ventilation outlet for venting gas from the crankcase volume. Traditionally, the gas from the crankcase volume of the crankcase has been vented to the surroundings. However, environmental concerns, as well as some legislations, require a closed crankcase ventilation system which means that the gas is led to an air inlet duct of the internal combustion engine. In this manner, the gas is returned to combustion chambers such that any particles, oil droplets, and residues in the gas can be combusted and such that the emissions formed thereof can be handled in an exhaust aftertreatment system of the internal combustion engine.

However, the particles, oil droplets, and residues in the gas may damage and cause wear of components of the internal combustion engine. Moreover, the particles, oil droplets, and residues in the gas may impair the operation of the internal combustion engine. As an example, in combustion engines comprising an air inlet charging system, such as a turbocharger system, the gas from the crankcase is normally led to an air inlet duct positioned upstream of a compressor unit of the air inlet charging system and the particles, oil droplets, and residues in the gas from the crankcase volume may damage the compressor unit of the turbocharger system. The gas from the crankcase is normally led to an air inlet duct positioned upstream of a compressor unit because the pressure downstream of the compressor unit is normally high which could lead to a reverse flow of gas from the air inlet system of the internal combustion engine to the crankcase volume of the crankcase via the crankcase ventilation outlet.

For the above given reasons, many internal combustion engines with a closed crankcase ventilation system comprise some type of gas cleaning assembly for cleaning the gas before the gas is led to an air inlet duct of the engine. In this manner, wear and damage of components of the internal combustion engine can be avoided and impairments in the operation of the internal combustion engine can be avoided. Such types of gas cleaning assemblies can comprise one or more filter units, oil separation arrangements, and the like. An oil separation arrangement is capable of separating oil droplets from the gas of the crankcase volume of the crankcase and return the separated oil to an oil pan of the engine. An oil separation arrangement is normally supplemented with a filter element arranged downstream of the oil separation arrangement to remove finer types of particles, oil droplets, and residues from the gas before the gas is led to the air inlet duct of the internal combustion engine. By returning the separated oil to an oil pan of the engine, the oil consumption of the engine can be reduced.

The wear status of an internal combustion engine affects the flow rate of gas flowing into the crankcase volume. That is, a worn internal combustion engine can have significantly higher flow rate of blow-by gas as well as higher leakage levels of gas into the crankcase volume of the crankcase from other sources. Moreover, due to tolerances, individual differences, and differences in operation, internal combustion engines can have significant individual differences in the flow rate of gas flowing into the crankcase volume. Moreover, there is a correlation between the flow rate of gas flowing into the crankcase volume of the crankcase and the amount of particles, oil droplets, and residues flowing out from the crankcase ventilation outlet. EP2614228 A1 describes a known example of a system for monitoring the amount of blow-by gas in a combustion engine so as to take preventive measures before blow-by gas caused by the wear can lead to engine damage.

A problem associated with internal combustion engines is that it may be difficult to diagnose the engine and detect present and upcoming wear and potential malfunctions of the internal combustion engine. Moreover, in internal combustion engines comprising a gas cleaning assembly with a filter element for cleaning gas from the crankcase volume of the crankcase, it can be difficult to determine a clogging status of the filter element.

As mentioned, there may be large individual differences between the flow rate of gas flowing through a crankcase ventilation outlet among engines. A filter element of a gas cleaning assembly for cleaning gas from the crankcase volume of the crankcase will be clogged much earlier in an engine having a high flow rate of gas flowing through the crankcase ventilation outlet as compared to an internal combustion engine having a lower flow rate of gas flowing through the crankcase ventilation outlet.

If the clogging status of the filter element becomes too high, there is a risk that the degradation rate of a compressor unit increases. Moreover, a saturated filter risks increasing the pressure in the crankcase volume of the crankcase. Too high pressures in the crankcase volume of the crankcase can cause oil carry over to an exhaust aftertreatment system and/or to an air inlet charging system, such as a turbocharger system. Moreover, in the long run, there is a risk of exothermal reaction in a diesel oxidation catalyst (DOC) and/or risk of ash if combusted oil degrades a diesel particulate filter (DPF) of the engine.

As indicated above, there may be large individual differences between the flow rate of gas from a crankcase ventilation outlet among engines. Therefore, it can be difficult to assess when to replace a filter element of a gas cleaning assembly. In many cases, the filter element is replaced when it is not needed which incur unnecessary costs for the replacement, and as indicated above, a too late replacement of the filter element may damage the internal combustion engine and thereto associated systems and arrangements.

Internal combustion engines are vital components of vehicles which are burdensome and costly to service, maintain, and repair. Therefore, it is an advantage if at least some operational aspects of an internal combustion engine can be estimated, and/or diagnosed, to prevent wear, tear, and damage of components of the internal combustion engine and the thereto associated systems and arrangements.

### SUMMARY

It is an object of the present invention to overcome, or at least alleviate, at least some of the above-mentioned problems and drawbacks. The object is achieved by a method according to claim 1, a computer program according to claim 8, a computer-readable medium according to claim 9, and a control arrangement according to claim 10.

According to a first aspect of the invention, the object is achieved by a method of estimating an operational aspect of an internal combustion engine, wherein the internal combustion engine comprises a crankcase enclosing at least part of a crankcase volume, a crankcase ventilation outlet connected to the crankcase volume, and a gas cleaning assembly comprising an oil separator unit and a pump unit configured to pump gas from the crankcase volume to the oil separator unit via the crankcase ventilation outlet. The method comprises the steps of:
- obtaining data indicative of a pumping rate of gas pumped by the pump unit, and
- estimating the flow rate of gas through the crankcase ventilation outlet based on the data.

Thereby, a method is provided capable of estimating the flow rate of gas through the crankcase ventilation outlet in a simple, efficient, and accurate manner. This is because the data indicative of a pumping rate of gas pumped by the pump unit can provide a clear indication of a current flow rate of gas through the crankcase ventilation outlet.

Moreover, in engines comprising a gas cleaning assembly with an oil separator unit and a pump unit, the method can be performed using data from already existing components of the internal combustion engine. Accordingly, a cost-efficient method is provided capable of estimating the flow rate of gas through the crankcase ventilation outlet.

As a further result, since the flow rate of gas through the crankcase ventilation outlet can be estimated in a simple, efficient, and accurate manner, conditions are provided for determining a wear status of components, systems, and arrangements of the internal combustion engine. In this manner, a method is provided having conditions for preventing further damage or wear of components, systems, and arrangements of the internal combustion engine by an early detection of high flow rate of gas through the crankcase ventilation outlet.

In addition, since the flow rate of gas through the crankcase ventilation outlet can be estimated in a simple, efficient, and accurate manner, conditions are provided for determining a clogging status of a filter element of the gas cleaning assembly, such as the clogging status of a filter element of the oil separator unit and/or a filter element arranged downstream of the oil separator unit. In this manner, a method is provided having conditions for providing an indication of when to replace such a filter element. In this manner, the method provides conditions for saving costs and/or preventing further damage or wear of components, systems, and arrangements of the internal combustion engine by an early detection of a clogged filter element.

Accordingly, a method is provided overcoming, or at least alleviating, at least some of the above-mentioned problems and drawbacks. As a result, the above-mentioned object is achieved.

Optionally, the pump unit comprises a pump member for pumping the gas from the crankcase volume to the oil separator unit, and wherein the data is indicative of an operation rate of the pump member. Thereby, a method is provided capable of obtaining reliable data indicative of the pumping rate of gas pumped by the pump unit in a simple and efficient manner. Moreover, a method is provided having conditions for obtaining the data using input from already existing components of the internal combustion engine. In this manner, conditions are provided for a cost-effective method.

Optionally, the pump member is a pump wheel, and wherein the operation rate of the pump member is indicative of the rotational speed of the pump wheel. Thereby, a method is provided capable of obtaining reliable data indicative of the pumping rate of gas pumped by the pump unit in a simple and efficient manner. Moreover, a method is provided having conditions for obtaining the data using input from already existing components of the internal combustion engine. In this manner, conditions are provided for a cost-effective method.

The data is indicative of a pressure at an inlet of the pump unit. Thereby, even more reliable data can be provided indicative of the pumping rate of gas pumped by the pump unit and thereby also even more reliable and accurate estimations of the flow rate of gas through the crankcase ventilation outlet.

Optionally, the pump unit comprises a pump member for pumping the gas from the crankcase volume to the oil separator unit and a power source for powering the pump member, and wherein the step of obtaining the data comprises the step of:
- monitoring an operation rate of the power source.

Thereby, a method is provided capable of obtaining reliable data indicative of the pumping rate of gas pumped by the pump unit in an even simpler manner. Moreover, a method is provided having conditions for obtaining the data using input from already existing components of the internal combustion engine. In this manner, conditions are provided for a cost-effective method.

Optionally, the pump unit comprises a pump member for pumping the gas from the crankcase volume to the oil separator unit,
and wherein the method comprises the steps of:
- controlling an operation rate of the pump member to maintain a pressure in the crankcase volume below a threshold pressure.

Thereby, it can be ensured that gas from the crankcase volume of the crankcase does not leak from the crankcase to the surroundings. Furthermore, it can be ensured that the oil separator unit can separate oil from the flow of gas from the crankcase volume of the crankcase in an efficient manner.

Moreover, even more accurate and reliable estimates can be provided of the flow rate of gas through the crankcase ventilation outlet. This is because, more reliable data indicative of a pumping rate of gas pumped by the pump unit can be provided as a result of the control of the operation rate of the pump member to maintain the pressure in the crankcase volume below the threshold pressure.

Optionally, the internal combustion engine comprises a pressure sensor configured to obtain pressure data representative of a current pressure in the crankcase volume, and wherein the step of controlling the operation rate of the pump member comprises the step of:
- controlling the operation rate of the pump member based on the pressure data from the pressure sensor.

Thereby, an accurate control of the operation rate of the pump member can be ensured. In other words, a more accurate control of the pressure inside the crankcase volume of the crankcase can be provided. As a further result, it can be further ensured that gas from the crankcase volume of the crankcase does not leak from the crankcase to the surroundings also at varying operational states of the internal combustion engine. In addition, it can be ensured that the oil separator unit can separate oil from the flow of gas from the crankcase volume of the crankcase in an efficient manner.

Furthermore, even more reliable data indicative of a pumping rate of gas pumped by the pump unit can be provided as a result of the more accurate control of the operation rate of the pump member. As a further result, even more accurate and reliable estimates can be provided of the flow rate of gas through the crankcase ventilation outlet.

Optionally, the threshold pressure is below atmospheric pressure. Thereby, it can be further ensured that gas from the crankcase volume of the crankcase does not leak from the crankcase to the surroundings.

The gas cleaning assembly comprises a filter element, the pump unit being arranged to pump gas through or against the filter element, and wherein the method comprises the step of:
- estimating a clogging status of the filter element based on the estimated flow rate of gas through the crankcase ventilation outlet.

Thereby, a method is provided capable of estimating the clogging status of the filter element in a simple, efficient, and accurate manner. This is because the estimated flow rate of gas through the crankcase ventilation outlet can provide a clear indication of the clogging status of the filter element.

As a further result, a method is provided having conditions for providing an indication of when to replace or clean the filter element. In this manner, the method provides conditions for saving costs and/or preventing further damage or wear of components, systems, and arrangements of the internal combustion engine by an early detection of a clogged filter element.

Furthermore, a method is provided having conditions for estimating a clogging status of the filter element in a simple, efficient, and accurate manner using data from already existing components of the internal combustion engine. In this manner, conditions are provided for a cost-effective method of estimating a clogging status of the filter element.

Optionally, when the gas cleaning assembly comprises a filter element, the pump unit being arranged to pump gas through or against the filter element, the method comprises the step of:
- estimating a clogging status of the filter element based on historical estimated flow rates of gas through the crankcase ventilation outlet.

Thereby, a method is provided capable of estimating the clogging status of the filter element in a simple, efficient, and accurate manner. This is because the historical estimated flow rates of gas through the crankcase ventilation outlet can provide a clear indication of the clogging status of the filter element.

As a further result, a method is provided having conditions for providing an indication of when to replace or clean the filter element. In this manner, the method provides conditions for saving costs and/or preventing further damage or wear of components, systems, and arrangements of the internal combustion engine by an early detection of a clogged filter element.

Furthermore, a method is provided having conditions for estimating a clogging status of the filter element in a simple, efficient, and accurate manner using data from already existing components of the internal combustion engine. In this manner, conditions are provided for a cost-effective method of estimating a clogging status of the filter element.

Optionally, the historical estimated flow rates of gas are estimated during a time period comprising a number of operation cycles of the internal combustion engine. Thereby, a method is provided capable of estimating the clogging status of the filter element in an even more accurate manner. This is because the historical estimated flow rates of gas being estimated during a time period comprising a number of operation cycles of the internal combustion engine can give a clearer indication of the clogging status of the filter element.

As a further result, a method is provided having conditions for providing more reliable indications of when to replace or clean the filter element. In this manner, the method provides improved conditions for saving costs, and/or improved conditions for preventing further damage or wear of components, systems, and arrangements of the internal combustion engine, by an early detection of a clogged filter element.

Optionally, the method comprises the step of:
- setting a fault indicator if the estimated clogging status of the filter element exceeds a threshold clogging status.

Thereby, method is provided having conditions for providing indications of when to replace or clean the filter element. In this manner, the method provides improved conditions for saving costs, and/or improved conditions for preventing further damage or wear of components, systems, and arrangements of the internal combustion engine.

The fault indicator may be represented by a specific fault code. The fault indicator may be saved into a memory, and/or may be outputted to, and/or on, another device such as an external diagnostics tool, and/or may be outputted on a user interface in a driver environment of a vehicle comprising the internal combustion engine.

Optionally, the filter element is connected to an outlet of the oil separator unit. Thereby, a method is provided capable of estimating the clogging status of such a filter element in a simple, efficient, and accurate manner.

Optionally, the oil separator unit is an oil mist separator. Thereby, an efficient separation of oil from the gas from the crankcase ventilation outlet can be ensured. Moreover, it can be further ensured that accurate and reliable estimates are provided of the flow rate of gas through the crankcase ventilation outlet. This is because the pumping rate of gas pumped by the pump unit of an oil mist separator can give clear indications of the flow rate of gas through the crankcase ventilation outlet.

According to a second aspect of the invention, the object is achieved by a computer program comprising instructions which, when the program is executed by a computer, cause the computer to carry out the method according to some embodiments of the present disclosure. Since the computer program comprises instructions which, when the program is executed by a computer, cause the computer to carry out the method according to some embodiments described herein, a computer program is provided which provides conditions for overcoming, or at least alleviating, at least some of the above-mentioned drawbacks. As a result, the above-mentioned object is achieved.

According to a third aspect of the invention, the object is achieved by a computer-readable medium comprising instructions which, when executed by a computer, cause the computer to carry out the method according to some embodiments of the present disclosure. Since the computer-readable medium comprises instructions which, when the program is executed by a computer, cause the computer to carry out the method according to some embodiments described herein, a computer-readable medium is provided which provides conditions for overcoming, or at least alleviating, at least some of the above-mentioned drawbacks. As a result, the above-mentioned object is achieved.

According to a fourth aspect of the invention, the object is achieved by a control arrangement for estimating an operational aspect of an internal combustion engine, wherein the internal combustion engine comprises a crankcase enclosing at least part of a crankcase volume, a crankcase ventilation outlet connected to the crankcase volume, and a gas cleaning assembly comprising an oil separator unit and a pump unit configured to pump gas from the crankcase volume to the oil separator unit via the crankcase ventilation outlet. The control arrangement is configured to:
- obtain data indicative of a pumping rate of gas pumped by the pump unit, and
- estimate the flow rate of gas through the crankcase ventilation outlet based on the data.

Thereby, a control arrangement is provided capable of estimating the flow rate of gas through the crankcase ventilation outlet in a simple, efficient, and accurate manner. This is because the data indicative of a pumping rate of gas pumped by the pump unit can provide a clear indication of a current flow rate of gas through the crankcase ventilation outlet.

Moreover, in engines comprising a gas cleaning assembly with an oil separator unit and a pump unit, the control arrangement has conditions for estimating the flow rate of gas through the crankcase ventilation using data from already existing components of the internal combustion engine. Thereby, a control arrangement is provided having conditions for estimating the flow rate of gas through the crankcase ventilation in a cost-efficient manner.

As a further result, since the flow rate of gas through the crankcase ventilation outlet can be estimated in a simple, efficient, and accurate manner, conditions are provided for determining a wear status of components, systems, and arrangements of the internal combustion engine. In this manner, a control arrangement is provided having conditions for preventing further damage or wear of components, systems, and arrangements of the internal combustion engine by an early detection of high flow rate of gas through the crankcase ventilation outlet.

In addition, since the flow rate of gas through the crankcase ventilation outlet can be estimated in a simple, efficient, and accurate manner, conditions are provided for determining a clogging status of a filter element of the gas cleaning assembly, such as the clogging status of a filter element of the oil separator unit and/or a filter element arranged downstream of the oil separator unit. In this manner, a control arrangement is provided having conditions for providing an indication of when to replace such a filter element. In this manner, the control arrangement provides conditions for saving costs and/or preventing further damage or wear of components, systems, and arrangements of the internal combustion engine by an early detection of a clogged filter element.

Accordingly, a control arrangement is provided overcoming, or at least alleviating, at least some of the above-mentioned problems and drawbacks. As a result, the above-mentioned object is achieved.

It will be appreciated that the various embodiments described for the method are all combinable with the control arrangement as described herein. That is, the control arrangement according to the fourth aspect of the invention may be configured to perform any one of the method steps of the method according to the first aspect of the invention.

According to a fifth aspect of the invention, the object is achieved by an internal combustion engine comprising a crankcase enclosing at least part of a crankcase volume, a crankcase ventilation outlet connected to the crankcase volume, and a gas cleaning assembly comprising an oil separator unit and a pump unit configured to pump gas from the crankcase volume to the oil separator unit via the crankcase ventilation outlet. The internal combustion engine comprises a control arrangement configured to:
- obtain data indicative of a pumping rate of gas pumped by the pump unit, and
- estimate the flow rate of gas through the crankcase ventilation outlet based on the data.

Thereby, the control arrangement of the internal combustion engine is capable of estimating the flow rate of gas through the crankcase ventilation outlet of the internal combustion engine in a simple, efficient, and accurate manner. This is because the data indicative of a pumping rate of gas pumped by the pump unit can provide a clear indication of a current flow rate of gas through the crankcase ventilation outlet of the internal combustion engine.

Moreover, an internal combustion engine is provided comprising a control arrangement having conditions for estimating the flow rate of gas through the crankcase ventilation using data from already existing components of the internal combustion engine. In other words, an internal combustion engine is provided comprising a control arrangement having conditions for estimating the flow rate of gas through the crankcase ventilation in a cost-efficient manner.

As a further result, since the flow rate of gas through the crankcase ventilation outlet of the internal combustion engine can be estimated in a simple, efficient, and accurate manner, conditions are provided for determining a wear status of components, systems, and arrangements of the internal combustion engine. In this manner, an internal combustion engine is provided comprising a control arrangement having conditions for preventing further damage or wear of components, systems, and arrangements of the internal combustion engine by an early detection of high flow rate of gas through the crankcase ventilation outlet.

In addition, since the flow rate of gas through the crankcase ventilation outlet of the internal combustion engine can be estimated in a simple, efficient, and accurate manner by the control arrangement, conditions are provided for determining a clogging status of a filter element of the gas cleaning assembly, such as the clogging status of a filter element of the oil separator unit and/or a filter element arranged downstream of the oil separator unit. In this manner, an internal combustion engine is provided comprising a control arrangement having conditions for providing an indication of when to replace such a filter element. In this manner, conditions are provided for saving costs and/or preventing further damage or wear of components, systems, and arrangements of the internal combustion engine by an early detection of a clogged filter element.

Accordingly, an internal combustion engine is provided overcoming, or at least alleviating, at least some of the above-mentioned problems and drawbacks. As a result, the above-mentioned object is achieved.

Optionally, the internal combustion engine comprises a crankshaft arranged at least partially inside the crankcase volume, a number of cylinders, and a piston arranged in each cylinder, wherein each piston is connected to the crankshaft such that the piston reciprocates in the cylinder upon rotation of the crankshaft.

Optionally, each piston of the internal combustion engine comprises a first face forming a delimiting surface of a combustion chamber of one of the number of cylinders and a second face forming a delimiting surface of the crankcase volume.

Optionally, an outlet of the oil separator unit is connected to an air inlet duct of the internal combustion engine. Thereby, an internal combustion engine is provided having a so-called closed crankcase ventilation system, while the control arrangement of the internal combustion engine capable of estimating the flow rate of gas through the crankcase ventilation outlet of the internal combustion engine in a simple, efficient, and accurate manner.

According to a sixth aspect of the invention, the object is achieved by a vehicle comprising an internal combustion engine according to some embodiments of the present disclosure.

Since the vehicle comprising an internal combustion engine according to some embodiments, a vehicle is provided having at least some of the above-mentioned advantages.

Accordingly, a vehicle is provided overcoming, or at least alleviating, at least some of the above-mentioned problems and drawbacks. As a result, the above-mentioned object is achieved.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig. 1 schematically illustrates a vehicle according to some embodiments,
Fig. 2 schematically illustrates an internal combustion engine of the vehicle illustrated in Fig. 1,
Fig. 3 schematically illustrates a method of estimating an operational aspect of an internal combustion engine, and
Fig. 4 illustrates a computer-readable medium.

### DETAILED DESCRIPTION

Aspects of the present invention will now be described more fully. Like reference signs refer to like elements throughout. Well-known functions or constructions will not necessarily be described in detail for brevity and/or clarity.

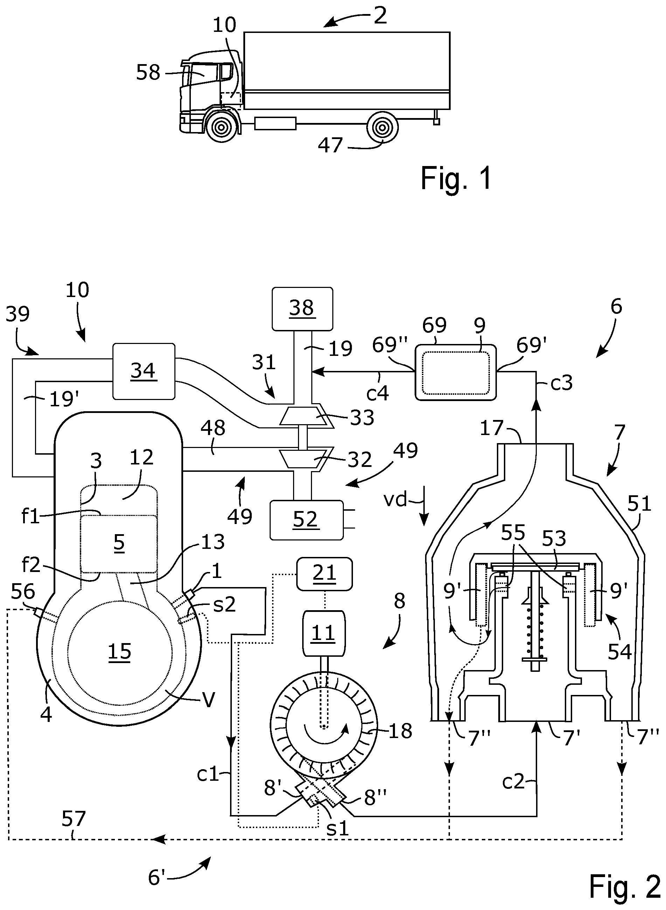

Fig. 1 schematically illustrates a vehicle 2 according to some embodiments. According to the illustrated embodiments, the vehicle 2 is a truck, i.e., a type of heavy road vehicle as well as a type of heavy commercial vehicle. According to further embodiments, the vehicle 2, as referred to herein, may be another type of heavy or lighter type of manned or unmanned vehicle for land-based propulsion such as a lorry, a bus, a construction vehicle, a tractor, a car, or the like.

The vehicle 2 comprises an internal combustion engine 10. The internal combustion engine 10 is configured to provide motive power to the vehicle 2 via wheels 47 of the vehicle 2. The vehicle 2 may further comprise one or more electric machines for providing motive power to the vehicle 2. The vehicle 2 may thus comprise a hybrid electric powertrain comprising one or more electric propulsion motors in addition to the internal combustion engine 10 for providing motive power to the vehicle 2.

Fig. 2 schematically illustrates the internal combustion engine 10 of the vehicle 2 illustrated in Fig. 1. According to the illustrated embodiments, the internal combustion engine 10 is a four-stroke internal combustion engine. Moreover, according to the illustrated embodiments, the internal combustion engine 10 is a diesel engine, i.e., a type of compression ignition engine. The internal combustion engine 10 may thus be configured to operate on diesel or a diesel-like fuel, such as biodiesel, biomass to liquid (BTL), or gas to liquid (GTL) diesel. Diesel-like fuels, such as biodiesel, can be obtained from renewable sources such as vegetable oil which mainly comprises fatty acid methyl esters (FAME). Diesel-like fuels can be produced from many types of oils, such as rapeseed oil (rapeseed methyl ester, RME) and soybean oil (soy methyl ester, SME).

According to further embodiments, the internal combustion engine 10, as referred to herein, may be an Otto engine with a spark-ignition device, wherein the Otto engine may be configured to run on petrol, alcohol, similar volatile fuels, or combinations thereof. Alcohol, such as ethanol, can be derived from renewable biomass. According to some embodiments, the internal combustion engine 10, as referred to herein, may be configured to power another type of unit or system than a vehicle, such as for example an electric generator.

The internal combustion engine 10 comprises a crankcase 4. The crankcase 4 encloses at least part of a crankcase volume V. The internal combustion engine 10 further comprises a crankshaft 15 arranged at least partially inside the crankcase volume V. The feature that crankshaft 15 is arranged at least partially inside the crankcase volume V may encompass that at least a portion of the crankshaft 15 extends through the crankcase volume V of the crankcase 4.

The internal combustion engine 10 comprises a number of cylinders 3. In Fig. 2, one cylinder 3 is schematically indicated in dotted lines. However, the internal combustion engine 10 may comprise a greater number of cylinders 3 than one, such as for example a number between two and eight or a number between two and twelve. In Fig. 2, the number of cylinders 3 is illustrated as being arranged in one row. However, the number of cylinders 3 of the internal combustion engine 10 may be arranged in another configuration than in one row, such as in two or more rows.

The internal combustion engine 10 comprises a piston 5 arranged in each cylinder 3 of the number of cylinders 3. In Fig. 2, one piston 5 is schematically indicated in dotted lines. However, as understood from the above, the internal combustion engine 10 comprises the same number of pistons 5 as the number of cylinders 3 and may thus comprise more than one piston 5. Each piston 5 is connected to the crankshaft 15 via a respective connecting rod 13 such that the piston 5 reciprocates in the cylinder 3 upon rotation of the crankshaft 15.

Moreover, each piston 5 of the internal combustion engine 10 comprises a first face f1 forming a delimiting surface of a combustion chamber 12 of one of the number of cylinders 3 and a second face f2 forming a delimiting surface of the crankcase volume V. The respective connecting rod 13 is arranged inside the crankcase volume V of the crankcase 4.

The internal combustion engine 10 further comprises an air filter arrangement 38 and an air inlet duct arrangement 39 for conducting air from the air filter arrangement 38 to an air inlet of the internal combustion engine 10. The internal combustion engine 10 further comprises a number of inlet valves for controlling the flow of air from the air inlet into the number of cylinders 3. The number of inlet valves may be controlled between a respective open and closed position based on the rotational position of the crankshaft 15 by an inlet valve control system. The number of inlet valves and the inlet valve control system are not illustrated in Fig. 2 for reasons of brevity and clarity.

The internal combustion engine 10 further comprises a number of exhaust valves for controlling the flow of exhaust gas from the number of cylinders 3 to an exhaust outlet of the internal combustion engine 10. Moreover, the internal combustion engine 10 comprises an exhaust system 49. The exhaust system 49 comprises an exhaust outlet duct 48 for conducting exhaust gas from the exhaust outlet of the internal combustion engine 10. The number of exhaust valves may be controlled between a respective open and closed position based on the rotational position of the crankshaft 15 by an exhaust valve control system. The number of exhaust valves and the exhaust valve control system are not illustrated in Fig. 2 for reasons of brevity and clarity.

The internal combustion engine 10 further comprises a fuel supply system configured to supply a fuel to the combustion chambers 12 of the internal combustion engine 10. The internal combustion engine 10 may comprise a number of fuel injectors each being configured to inject fuel into a respective cylinder 3 of the number of cylinders 3. The fuel supply system of the internal combustion engine 10 is not illustrated in Fig. 2 for reasons of brevity and clarity.

According to the illustrated embodiments, the internal combustion engine 10 comprises a turbocharger system 31. The turbocharger system 31 comprises a turbine housing and a turbine 32 arranged in the turbine housing. The turbine housing comprises an inlet connected to the exhaust outlet duct 48. The turbine 32 is configured to be driven to rotate by the flow of exhaust gas flowing from the exhaust outlet duct 48 through the turbine housing. The turbocharger system 31 further comprises a compressor housing and a compressor wheel 33 arranged in the compressor housing. The compressor wheel 33 connected to the turbine 32 via a shaft. The compressor wheel 33 is arranged to corotate with the turbine 32. In other words, the compressor wheel 32 is configured to be driven to rotate by the flow of exhaust gas flowing from the exhaust outlet duct 48 through the turbine housing.

The air inlet duct arrangement 39 comprises an air inlet duct 19 connecting the air filter arrangement 38 to an inlet of the compressor housing. Moreover, the air inlet duct arrangement 39 comprises a duct section 19' connecting an outlet of the compressor housing to the air inlet of the internal combustion engine 10. Moreover, according to the illustrated embodiments, the duct section 19' of the air inlet duct arrangement 39 comprises a charge air cooler 34. Some components referred to above have not been provided with reference signs in Fig. 2 for reasons of brevity and clarity. These components include the compressor housing, the turbine housing, the air inlet of the internal combustion engine 10, the exhaust outlet of the internal combustion engine 10, and the shaft connecting the turbine 32 and the compressor wheel 33.

Upon rotation, the compressor wheel 33 forces, i.e., compresses, air from the air filter arrangement 38 to the air inlet of the internal combustion engine 10. The charge air cooler 34 is configured to cool the air being compressed by the compressor wheel 33. The turbine 32, the turbine housing, the compressor wheel 33, the compressor housing, and the shaft connecting the turbine 32 and the compressor wheel 33 may together be referred to as a turbocharger. In Fig. 2, the turbocharger system 31 of the internal combustion engine 10 is illustrated as comprising one turbocharger. However, according to further embodiments, the turbocharger system 31 of the internal combustion engine 10 may comprise two or more turbochargers. Such two or more turbochargers may be arranged in parallel or in series for compressing air to the air inlet of the internal combustion engine 10.

The exhaust system 49 of the internal combustion engine 10 comprises an exhaust aftertreatment system 52. The exhaust aftertreatment system 52 may comprise one or more of a catalytic converter, a selective catalytic reduction arrangement, a diesel oxidation catalyst, a particulate filter, or the like.

During operation of the internal combustion engine 10, some gas may leak from the combustion chambers 12 of the internal combustion engine 10 into the crankcase volume V of the crankcase 4 via the space between mantle surfaces of the pistons 5 and cylinder walls of the cylinder.

Such gas is commonly referred to as blow-by gas. Blow-by gas normally comprises a mixture of air, burned and unburned gases, particles, oil droplets, and combustion residues. Gas can also leak into the crankcase volume V of the crankcase 4 from other sources, such as from an air inlet charging system, such as the turbocharger system 31, valve systems, such as inlet and exhaust valve systems, air compressor systems, and the like.

The internal combustion engine 10 is provided with a crankcase ventilation outlet 1 for venting gas from the crankcase volume V of the crankcase 4. In this manner, too high pressures in the crankcase volume V of the crankcase 4 can be avoided. The crankcase ventilation outlet 1 is connected to the crankcase volume V of the crankcase 4.

The internal combustion engine 10 further comprises a gas cleaning assembly 6 for cleaning gas from the crankcase ventilation outlet 1. According to the illustrated embodiments, the gas cleaning assembly 6 form part of a closed crankcase ventilation system 6'. The closed crankcase ventilation system 6' comprises the gas cleaning assembly 6 and a number of conduits c1, c2, c3, c4 for conducting gas from the crankcase ventilation outlet 1 to the air inlet duct 19 of the internal combustion engine 10 via the components of the closed crankcase ventilation system 6'. The features, functions, and advantages of the closed crankcase ventilation system 6' is further explained below. The reference sign for the number of conduits c1, c2, c3, c4 is in some places below abbreviated "c1 - c4".

The gas cleaning assembly 6 comprises an oil separator unit 7 and a pump unit 8 configured to pump gas from the crankcase volume V to the oil separator unit 7 via the crankcase ventilation outlet 1. In more detail, the number of conduits c1 - c4 comprises a first conduit c1 connecting an inlet 8' of the pump unit 8 to the crankcase ventilation outlet 1. Moreover, the number of conduits c1 - c4 comprises a second conduit c2 connecting an outlet 8" of the pump unit 8 to an inlet 7' of oil separator unit 7. The pump unit 8 is configured to pump gas from the crankcase ventilation outlet 1 into the inlet 7' of the oil separator unit 7.

According to the illustrated embodiments, the pump unit 8 comprises a pump member 18 for pumping the gas from the crankcase volume V to the oil separator unit 7. The pump unit 8 further comprises a power source 11 for powering, i.e., driving, the pump member 18. In more detail, according to the illustrated embodiments, the pump member 18 is a pump wheel configured to be powered by being rotated by the power source 11. Moreover, according to the illustrated embodiments, the power source 11 comprises an electric motor.

According to the illustrated embodiments, the oil separator unit 7 is an oil mist separator, i.e., an oil separator unit 7 operating with the so-called impactor principle. The oil separator unit 7 comprises a separator housing 51 and a spring-loaded flat seat valve 53 arranged in the separator housing 51. The oil separator unit 7 further comprises an impactor dome 54 and a filter element 9' attached to the impactor dome 54. The oil separator unit 7 further comprises a number of nozzles 55 arranged such that gas is ejected through the number of nozzles 55 against the filter element 9' when gas is pumped into the inlet 7' of the oil separator unit 7. The impactor dome 54 encloses at least part of the spring-loaded flat seat valve 53 and the number of nozzles 55. Oil contained in the gas ejected from the number of nozzles 55 is trapped in the filter element 9'. Moreover, as indicated with the dashed line in Fig. 2, the trapped oil in the filter element 9' can, at least partially with the aid of gravity, be transported to an oil outlet 7" of the oil separator unit 7.

The oil separator unit 7 is associated with an intended mounting orientation relative to a vertical direction of a vehicle. In Fig. 2, a vertical direction vd of the vehicle 2 illustrated in Fig. 1 is indicated and, in Fig. 2, the oil separator unit 7 is schematically illustrated in the intended mounting orientation relative to the vertical direction vd. A local gravity vector is parallel to the vertical direction vd of the vehicle 2 when the internal combustion engine 10 is mounted to the vehicle 2 and the vehicle 2 is positioned in an upright use position on a flat horizontal support surface. Wheels 47 of the vehicle 2 abut against the flat horizontal support surface when the vehicle 2 is positioned in the upright use position thereon. Below, simultaneous reference is made to Fig. 1 and Fig. 2, if not indicated otherwise.

According to the illustrated embodiments, the oil separator unit 7 comprises two oil outlets 7". However, the oil separator unit 7 may comprise one oil outlet 7" only or may comprise more than two oil outlets 7". Each oil outlet 7" of the oil separator unit 7 is connected to an oil pan of the internal combustion engine 10 via an oil return conduit 57 and an oil return inlet 56. The oil pan of the internal combustion engine 10 may also be referred to as an oil sump. Moreover, each oil outlet 7" of the oil separator unit 7 is arranged below the impactor dome 54, as well as below the outlet 17 of the oil separator unit 7, when the oil separator unit 7 is arranged in the intended mounting orientation on a vehicle 2.

The filter element 9' of the oil separator unit 7 may be a nonwoven filter element and may comprise a hydrophobic filter material. As indicated with the solid arrowed line inside the oil separator unit 7 in Fig. 2, the at least substantially oil-free gas can flow to the outlet 17 of the oil separator unit 7. The outlet 17 of the oil separator unit 7 may also be referred to as a gas outlet of the oil separator unit 7.

The closed crankcase ventilation system 6' comprises a third conduit c3 connecting the outlet 17 of the oil separator unit 7 to an inlet 69' of a filter housing 69. The filter housing 69 comprises a filter element 9. The filter element 9 of the filter housing 69 may also be referred to as an additional filter element arranged downstream of the oil separator unit 7 as seen relative to an intended flow direction of gas through the closed crankcase ventilation system 6'. The filter element 9 is configured to further filtrate particles, oil droplets, and residues from the gas flowing through the closed crankcase ventilation system 6'. The filter element 9 may comprise woven or nonwoven filter material of conventional type.

The closed crankcase ventilation system 6' further comprises a fourth conduit c4 connecting an outlet 69" of the filter housing 69 to the air inlet duct 19 of the internal combustion engine 10. As understood from the above, according to the illustrated embodiments, the outlet 17 of the oil separator unit 7 is connected to the air inlet duct 19 of the internal combustion engine 10 via the filter element 9 of the filter housing 69. Likewise, the filter element 9 of the filter housing 69 is connected to the outlet 17 of the oil separator unit 7 via the third conduit c3 and the inlet 69' of the filter housing 69. As seen in Fig. 2, the fourth conduit c4 is connected to the air inlet duct 19 at a position upstream of the compressor wheel 33 of the turbocharger system 31 as seen relative to an intended flow direction of air through the air inlet duct arrangement 39.

Due to the closed crankcase ventilation system 6' with the gas cleaning assembly 6, at least substantially clean gas can be returned from the crankcase volume V of the crankcase 4 to the air inlet duct 19 of the internal combustion engine 10. In this manner, the components of the internal combustion engine 10, such as the compressor wheel 33 of the turbocharger system 31, can be protected from becoming damaged. Moreover, a steady and nonimpaired operation of the internal combustion engine 10 can be ensured.

However, after a certain operational time of the internal combustion engine 10, one or both of the filter elements 9, 9' of the gas cleaning assembly 6 may become clogged. Moreover, one or both of the filter elements 9, 9' may become clogged earlier than expected for example in case of a worn internal combustion engine 10, a malfunction of one or more components thereof, or the like, which causes a high flowrate of gas through the crankcase ventilation outlet 1. However, the filter element 9 arranged in the filter housing 69 downstream of the oil separator unit 7 may be more likely to become clogged than the filter element 9' of the oil separator unit 7. This is because the filter element 9' of the oil separator unit 7 may be provided with the self-cleaning function explained above with the hydrophobic filter material and the drainage of oil to the oil outlets 7" of the oil separator unit 7.

As can be seen in Fig. 2, the internal combustion engine 10 comprises a control arrangement 21. As is further explained herein, the control arrangement 21 is configured to estimate an operational aspect of an internal combustion engine 10.

According to embodiments herein, the control arrangement 21 is configured to obtain data indicative of a pumping rate of gas pumped by the pump unit 8 and is configured to estimate the flow rate of gas flowing through the crankcase ventilation outlet 1 based on the data.

In more detail, according to the illustrated embodiments, the control arrangement 21 is configured to obtain data indicative of an operation rate of the pump member 18. Since the pump member 18 is arranged to be rotated by the power source 11 according to the illustrated embodiments, the operation rate of the pump member 18 is indicative of the rotational speed of the pump wheel in these embodiments.

According to some embodiments, the control arrangement 21 is configured to obtain data indicative of a pumping rate of gas pumped by the pump unit 8 by monitoring an operation rate of the power source 11. In this manner, the control arrangement 21 can obtain the data indicative of a pumping rate of gas pumped by the pump unit 8 in a simple, efficient, and reliable manner. The control arrangement 21 may be configured to monitor the operation rate of the power source 11 by monitoring one or more electrical quantities of electricity supplied to/from the power source 11. The one or more electrical quantities may for example comprise an electric voltage and/or an electric current supplied to/from the power source 11.

As an alternative, or in addition, the control arrangement 21 may be configured to monitor the operation rate of the power source 11 by monitoring control data, such as by monitoring a set point for the operation rate of the power source 11. The set point for the operation rate of the power source 11 may be obtained from the control arrangement 21 or from another type of control device. Furthermore, according to some embodiments, the gas cleaning assembly 6 may comprise a device, such as a sensor, for monitoring the rotational speed of the pump wheel of the pump member 18. According to such embodiments, the control arrangement 21 may be configured to obtain data indicative of a pumping rate of gas pumped by the pump unit 8 using input from such a device.

Moreover, according to some embodiments, the data is indicative of a pressure at an inlet 8' of the pump unit 8. That is, as can be seen in Fig. 2, according to the illustrated embodiments, the internal combustion engine 10 comprises two pressure sensors s1, s2 each configured to obtain pressure data representative of a current pressure in the crankcase volume V. In more detail, the two pressure sensors s1, s2 comprise a first pressure sensor s1 configured to sense a current pressure at the inlet 8' of the pump unit 8 and a second sensor s2 configured to sense a current pressure inside the crankcase volume V of the crankcase 4. According to further embodiments, the internal combustion engine 10 may comprise only one of the two pressure sensors s1, s2.

According to some embodiments, the control arrangement 21 is configured to control an operation rate of the pump member 18 to maintain a pressure in the crankcase volume V below a threshold pressure. The threshold pressure may be below atmospheric pressure. In more detail, according to these embodiments, the control arrangement 21 may be configured to control the operation rate of the pump member 18 based on the pressure data from one or both of the pressure sensors s1, s2 to maintain the pressure in the crankcase volume V below the threshold pressure.

Thereby, it can be ensured that gas from the crankcase volume V of the crankcase 4 does not leak from the crankcase 4 to the surroundings. Furthermore, it can be ensured that the oil separator unit 7 can separate oil from the flow of gas from the crankcase volume V of the crankcase 4 in an efficient manner. Furthermore, damage, wear, and premature aging of the exhaust aftertreatment system 52 and the components thereof can be avoided.

Moreover, even more accurate and reliable estimates can be provided of the flow rate of gas flowing through the crankcase ventilation outlet 1. This is because, more reliable data indicative of a pumping rate of gas pumped by the pump unit 8 can be provided as a result of the control of the operation rate of the pump member 18.

The control arrangement 21 may be configured to control the operation rate of the pump member 18 to maintain the pressure in the crankcase volume V below the threshold pressure using a proportional-integral-derivative controller, also referred to as a PID-controller, and data from one or both of the pressure sensors s1, s2 as input to the proportional-integral-derivative controller. In this manner, an accurate control of the operation rate of the pump member 18 can be provided, and thus also an accurate control of the pressure in the crankcase volume V.

According to some embodiments, the control arrangement 21 is configured to obtain the data indicative of a pumping rate of gas pumped by the pump unit 8 by monitoring the operation rate of the power source 11 and by monitoring the current pressure at the inlet 8' of the pump unit 8. The current pressure at the inlet 8' of the pump unit 8 may be monitored using input from the first pressure sensor s1 referred to above.

Moreover, as understood from the above, the control arrangement 21 may be configured to estimate the current flow rate of gas flowing through the crankcase ventilation outlet 1 based on such data. In this manner, the control arrangement 21 can estimate the flow rate of gas flowing through the crankcase ventilation outlet 1 in a simple, efficient, and accurate manner. Moreover, the control arrangement 21 can provide accurate estimates of the flow rate of gas flowing through the crankcase ventilation outlet 1 using already existing components of the internal combustion engine 10.

The flow rate of gas through the crankcase ventilation outlet 1 is an operational aspect of the internal combustion engine 10. Moreover, as is further explained herein, the control arrangement 21 may be configured to estimate one or more further operational aspects based on the estimated flow rate of gas through the crankcase ventilation outlet 1.

The flow rate of gas through the crankcase ventilation outlet 1 can indicate a wear status of components of the internal combustion engine 10. As an example, a high flow rate of gas through the crankcase ventilation outlet 1 can indicate that the spaces between mantle surfaces of pistons 5 and cylinder walls of cylinders 3 are not properly sealed.

According to some embodiments, the control arrangement 21 is configured to set a fault indicator in case the estimated flow rate of gas through the crankcase ventilation outlet 1 exceeds a threshold flowrate.

Moreover, according to some embodiments, the control arrangement 21 may be configured to analyse estimated flow rate data of gas through the crankcase ventilation outlet 1 at different operational conditions of the internal combustion engine 10 to thereby separate between different probable malfunctions of the internal combustion engine 10. In such embodiments, the control arrangement 21 may be configured to set different fault indicators each indicating a specific probable malfunction of the internal combustion engine 10.

The operational conditions of the internal combustion engine 10 may comprise a rotational speed of the internal combustion engine 10, a load of the internal combustion engine 10, a torque of the internal combustion engine 10, a power of the internal combustion engine 10, a fuel injection amount into cylinders 3 of the internal combustion engine 10, a fuel injection duration of fuel into cylinders 3 of the internal combustion engine 10, an estimated or measured cylinder pressure of cylinders 3 of the internal combustion engine 10, an activation status of a compression release brake arrangement of the internal combustion engine 10, an activation status of a variable valve control arrangement, a temperature of the internal combustion engine 10, and the like.

In other words, according to some embodiments, the control arrangement 21 may be configured to compare estimated flow rate data of gas flowing through the crankcase ventilation outlet 1 and different operational conditions of the internal combustion engine 10, such as one or more of the above mentioned operational conditions, to thereby separate between different probable malfunctions of the internal combustion engine 10 and set different fault indicators in response thereto each indicating a specific probable malfunction of the internal combustion engine 10.

As a first example, the control arrangement 21 may be configured to set a fault indicator indicating that the spaces between mantle surfaces of pistons 5 and cylinder walls of cylinders 3 are not properly sealed in case the estimated flow rate of gas flowing through the crankcase ventilation outlet 1 exceeds a threshold flowrate upon high estimated or measured cylinder pressures and/or upon high rotational speeds of the internal combustion engine 10.

As a second example, the control arrangement 21 may be configured to set a fault indicator indicating a probable malfunction of a compression release brake arrangement of the internal combustion engine 10 in response to a detection of a certain increase in the estimated flow rate of gas flowing through the crankcase ventilation outlet 1 upon changes in the activation status of the compression release brake arrangement.

As a third example, the control arrangement 21 may be configured to set a fault indicator indicating a probable malfunction of a variable valve control arrangement of the internal combustion engine 10 in response to a detection of a certain increase in the estimated flow rate of gas flowing through the crankcase ventilation outlet 1 upon changes in the activation status of the variable valve control arrangement.

Moreover, according to some embodiments, the control arrangement 21 is configured to estimate a clogging status of a filter element 9, 9' of the gas cleaning assembly 6 based on the estimated flow rate of gas flowing through the crankcase ventilation outlet 1. According to these embodiments, the control arrangement 21 may be configured to monitor the estimated flow rate of gas flowing through the crankcase ventilation outlet 1 over time and may estimate the clogging status of a filter element 9, 9' of the gas cleaning assembly 6 based on estimated flow rate of gas through the crankcase ventilation outlet 1 having occurred during a certain time period.

In other words, according to these embodiments, the control arrangement 21 may be configured to estimate a clogging status of the filter element 9, 9' based on historical estimated flow rates of gas through the crankcase ventilation outlet 1. The historical estimated flow rates of gas are estimated during a time period comprising a number of operation cycles of the internal combustion engine 10. The number of operation cycles of the internal combustion engine 10 may be a number exceeding twenty or exceeding fifty.

Moreover, the control arrangement 21 may be configured to set a fault indicator indicating that one or more filter elements 9, 9' of the gas cleaning assembly 6 is clogged if the estimated clogging status of the one or more filter elements 9, 9' exceeds a threshold clogging status.

The estimation of the clogging status of a filter element 9, 9' may be based on a total amount of gas having flown through the crankcase ventilation outlet 1, and thus also through the gas cleaning assembly 6, since a last replacement or cleaning procedure of a filter element 9, 9' of the gas cleaning assembly 6.

However, there is a correlation between the magnitude of the flow rate of gas flowing through the crankcase ventilation outlet 1 and the amount of particles, oil droplets, and residues flowing out from the crankcase ventilation outlet 1. Therefore, as an alternative or in addition to the above described, the estimation of the clogging status of a filter element 9, 9' may be based on a weighted comparison between a magnitude of the estimated flow rates of gas having flown through the crankcase ventilation outlet 1 and an estimate of a total amount of gas having flown through the crankcase ventilation outlet 1. In this manner, the clogging status of the filter element 9, 9' of the gas cleaning assembly 6 can be predicted by the control arrangement 21 in an even more accurate manner.

Any of the herein described fault indicators may be represented by a specific fault code. The fault indicator/ fault indicators may be saved into a memory, and/or may be outputted to, and/or on, another device such as an external diagnostics tool, and/or may be outputted on a user interface in a driver environment 58 of the vehicle 2. A driver environment 58 of the vehicle 2 is schematically indicated in Fig. 1.

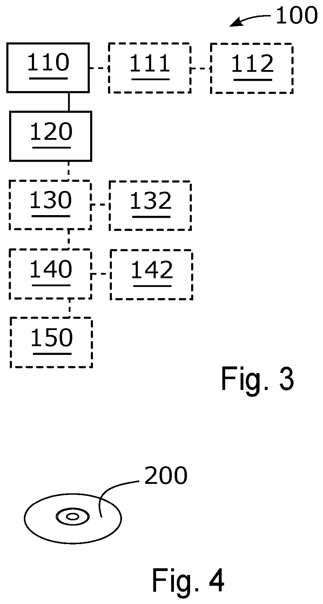

Fig. 3 schematically illustrates a method 100 of estimating an operational aspect of an internal combustion engine. The internal combustion engine may be an internal combustion engine 10 according to the embodiments illustrated in Fig. 2, i.e., an internal combustion engine 10 of a vehicle 2 according to the embodiments illustrated in Fig. 1. Therefore, below, simultaneous reference is made to Fig. 1 - Fig. 3, if not indicated otherwise.

The method 100 is method of estimating an operational aspect of an internal combustion engine 10, wherein the internal combustion engine 10 comprises:
- a crankcase 4 enclosing at least part of a crankcase volume V,
- a crankcase ventilation outlet 1 connected to the crankcase volume V, and
- a gas cleaning assembly 6 comprising an oil separator unit 7 and a pump unit 8 configured to pump gas from the crankcase volume V to the oil separator unit 7 via the crankcase ventilation outlet 1,
and wherein the method 100 comprises the steps of:
- obtaining 110 data indicative of a pumping rate of gas pumped by the pump unit 8, and
- estimating 120 the flow rate of gas flowing through the crankcase ventilation outlet 1 based on the data.

The method 100, as referred to herein, may also be referred to as a method of estimating a flow rate of gas through a crankcase ventilation outlet 1 of an internal combustion engine 10.

Optionally, the pump unit 8 comprises a pump member 18 for pumping the gas from the crankcase volume V to the oil separator unit 7, and wherein the data is indicative of an operation rate of the pump member 18.

According to some embodiments, the pump member 18 is a pump wheel, and wherein the operation rate of the pump member 18 is indicative of the rotational speed of the pump wheel.

Moreover, according to some embodiments, the data is indicative of a pressure at an inlet 8' of the pump unit 8. According to these embodiments, the method 100 may comprise the step of:
- monitoring 111 a pressure at the inlet 8' of the pump unit 8.

According to some embodiments, the internal combustion engine 10 comprises a pressure sensor s1 configured to obtain pressure data representative of a current pressure at the inlet 8' of the pump unit 8. According to these embodiments, the step of monitoring 111 the pressure at the inlet 8' of the pump unit 8 may be performed by monitoring data from the pressure sensor s1. Such a pressure sensor s1 may also be referred to as a first pressure sensor s1. The pressure sensor s1 may be arranged at the inlet 8' of the pump unit 8. As an alternative, or in addition, the pressure at the inlet 8' of the pump unit 8 may be obtained in another manner such as by using pressure data from another type of sensor, such as a sensor s2 configured to obtain pressure data representative of a current pressure in the crankcase volume V of the crankcase 4.

Optionally, the pump unit 8 comprises a pump member 18 for pumping the gas from the crankcase volume V to the oil separator unit 7 and a power source 11 for powering the pump member 18. According to such embodiments, the step of obtaining 110 the data may comprise the step of:
- monitoring 112 an operation rate of the power source 11.

The step of monitoring 112 the operation rate of the power source 11 may involve a monitoring of one or more electrical quantities of electricity supplied to/from the power source 11. The one or more electrical quantities may for example comprise an electric voltage and/or an electric current supplied to/from the power source 11.

According to some embodiments, the pump unit 8 comprises a pump member 18 for pumping the gas from the crankcase volume V to the oil separator unit 7. According to such embodiments, the method 100 may comprise the steps of:
- controlling 130 an operation rate of the pump member 18 to maintain a pressure in the crankcase volume V below a threshold pressure.

The internal combustion engine 10 may comprise a pressure sensor s1, s2 configured to obtain pressure data representative of a current pressure in the crankcase volume V. According to such embodiments, and the step of controlling 130 the operation rate of the pump member 18 may comprise the step of:
- controlling 132 the operation rate of the pump member 18 based on the pressure data from the pressure sensor s1, s2.

According to some embodiments, the gas cleaning assembly 6 comprises a filter element 9, 9', and wherein the pump unit 8 is arranged to pump gas through or against the filter element 9, 9'. According to such embodiments, the method 100 may comprise the step of:
- estimating 140 a clogging status of the filter element 9, 9' based on the estimated flow rate of gas through the crankcase ventilation outlet 1.

As an alternative, or in addition, the method 100 may comprise the step of:
- estimating 142 a clogging status of the filter element 9, 9' based on historical estimated flow rates of gas through the crankcase ventilation outlet 1.

The historical estimated flow rates of gas may be estimated during a time period comprising a number of operation cycles of the internal combustion engine 10.

Moreover, the method 100 may comprise the step of:
- setting 150 a fault indicator if the estimated clogging status of the filter element 9, 9' exceeds a threshold clogging status.

It will be appreciated that the various embodiments described for the method 100 are all combinable with the control arrangement 21 as described herein. That is, the control arrangement 21 may be configured to perform any one of the method steps 110, 111, 112, 120, 130, 132, 140, 142, and 150 of the method 100.

**Fig. 4** illustrates a computer-readable medium 200 comprising instructions which, when executed by a computer, cause the computer to carry out the method 100 according to some embodiments of the present disclosure. According to some embodiments, the computer-readable medium 200 comprises a computer program comprising instructions which, when the program is executed by a computer, cause the computer to carry out the method 100 according to some embodiments.

One skilled in the art will appreciate that the method 100 of estimating an operational aspect of an internal combustion engine 10 may be implemented by programmed instructions. These programmed instructions are typically constituted by a computer program, which, when it is executed in the control arrangement 21, ensures that the control arrangement 21 carries out the desired control, such as the method steps 110, 111, 112, 120, 130, 132, 140, 142, and 150 described herein. The computer program is usually part of a computer program product 200 which comprises a suitable digital storage medium on which the computer program is stored.

The control arrangement 21 may comprise a calculation unit which may take the form of substantially any suitable type of processor circuit or microcomputer, e.g., a circuit for digital signal processing (digital signal processor, DSP), a Central Processing Unit (CPU), a processing unit, a processing circuit, a processor, an Application Specific Integrated Circuit (ASIC), a microprocessor, or other processing logic that may interpret and execute instructions. The herein utilised expression "calculation unit" may represent a processing circuitry comprising a plurality of processing circuits, such as, e.g., any, some or all of the ones mentioned above.

The control arrangement 21 may further comprise a memory unit, wherein the calculation unit may be connected to the memory unit, which may provide the calculation unit with, for example, stored program code and/or stored data which the calculation unit may need to enable it to do calculations. The calculation unit may also be adapted to store partial or final results of calculations in the memory unit. The memory unit may comprise a physical device utilised to store data or programs, i.e., sequences of instructions, on a temporary or permanent basis. According to some embodiments, the memory unit may comprise integrated circuits comprising silicon-based transistors. The memory unit may comprise e.g., a memory card, a flash memory, a USB memory, a hard disc, or another similar volatile or non-volatile storage unit for storing data such as e.g., ROM (Read-Only Memory), PROM (Programmable Read-Only Memory), EPROM (Erasable PROM), EEPROM (Electrically Erasable PROM), etc. in different embodiments.

The control arrangement 21 may be connected to components of the internal combustion engine 10, the gas cleaning assembly 6, the closed crankcase ventilation system 6', and/or other parts of the vehicle 2 receiving and/or sending input and output signals. These input and output signals may comprise waveforms, pulses, or other attributes which the input signal receiving devices can detect as information and which can be converted to signals processable by the control arrangement 21. These signals may then be supplied to the calculation unit. One or more output signal sending devices may be arranged to convert calculation results from the calculation unit to output signals for conveying to other parts of the vehicle's control system and/or the component or components for which the signals are intended. Each of the connections to the respective components of the internal combustion engine 10, the gas cleaning assembly 6, the closed crankcase ventilation system 6', and/or other parts of the vehicle 2, for receiving and sending input and output signals may take the form of one or more from among a cable, a data bus, e.g., a CAN (controller area network) bus, a MOST (media orientated systems transport) bus or some other bus configuration, or a wireless connection.

In the embodiments illustrated, the vehicle 2 comprises a control arrangement 21 but might alternatively be implemented wholly or partly in two or more control arrangements or two or more control units.

Control systems in modern vehicles generally comprise a communication bus system consisting of one or more communication buses for connecting a number of electronic control units (ECUs), or controllers, to various components on board the vehicle. Such a control system may comprise a large number of control units and taking care of a specific function may be shared between two or more of them. Vehicles of the type here concerned are therefore often provided with significantly more control arrangements than depicted in Fig. 2, as one skilled in the art will surely appreciate.

The computer program product 200 may be provided for instance in the form of a data carrier carrying computer program code for performing at least some of the method steps 110, 111, 112, 120, 130, 132, 140, 142, and 150 according to some embodiments when being loaded into one or more calculation units of the control arrangement 21. The data carrier may be, e.g. a CD ROM disc, as is illustrated in Fig. 4, or a ROM (read-only memory), a PROM (programable read-only memory), an EPROM (erasable PROM), a flash memory, an EEPROM (electrically erasable PROM), a hard disc, a memory stick, an optical storage device, a magnetic storage device or any other appropriate medium such as a disk or tape that may hold machine readable data in a non-transitory manner. The computer program product may furthermore be provided as computer program code on a server and may be downloaded to the control arrangement 21 remotely, e.g., over an Internet or an intranet connection, or via other wired or wireless communication systems.

The wording upstream and downstream, as used herein, relates to the relative positions of objects in relation to an intended flow direction of fluid in the system, component, or circuit referred to. As an example, the feature that a first object is arranged upstream of a second object in a circuit means that the first object is arranged before the second object seen relative to the intended flow direction of fluid through the circuit. As another example, the feature that a first object is arranged downstream of a second object in a circuit means that the first object is arranged after the second object seen relative to the intended flow direction of fluid through the circuit.

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A method (100) of estimating an operational aspect of an internal combustion engine (10), wherein the internal combustion engine (10) comprises:
- a crankcase (4) enclosing at least part of a crankcase volume (V),
- a crankcase ventilation outlet (1) connected to the crankcase volume (V), and
- a gas cleaning assembly (6) comprising an oil separator unit (7) and a pump unit (8) configured to pump gas from the crankcase volume (V) to the oil separator unit (7) via the crankcase ventilation outlet (1),
and wherein the method (100) comprises the steps of:
- obtaining (110) data indicative of a pumping rate of gas pumped by the pump unit (8), and
- estimating (120) the flow rate of gas through the crankcase ventilation outlet (1) based on the data, wherein the data is indicative of a pressure at an inlet (8') of the pump unit (8), and wherein the gas cleaning assembly (6) comprises a filter element (9, 9'), the pump unit (8) being arranged to pump gas through or against the filter element (9, 9'), and wherein the method (100) comprises the step of:
- estimating (140) a clogging status of the filter element (9, 9') based on the estimated flow rate of gas through the crankcase ventilation outlet (1).

2. The method (100) according to claim 1, wherein the pump unit (8) comprises a pump member (18) for pumping the gas from the crankcase volume (V) to the oil separator unit (7), and wherein the data is indicative of an operation rate of the pump member (18).

3. The method (100) according to any one of the preceding claims, wherein the pump unit (8) comprises a pump member (18) for pumping the gas from the crankcase volume (V) to the oil separator unit (7) and a power source (11) for powering the pump member (18), and wherein the step of obtaining (110) the data comprises the step of:
- monitoring (112) an operation rate of the power source (11).

4. The method (100) according to any one of the preceding claims, wherein the pump unit (8) comprises a pump member (18) for pumping the gas from the crankcase volume (V) to the oil separator unit (7),
and wherein the method (100) comprises the steps of:
- controlling (130) an operation rate of the pump member (18) to maintain a pressure in the crankcase volume (V) below a threshold pressure.

5. The method (100) according to any one of the preceding claims, wherein the method (100) comprises the step of:
- estimating (142) a clogging status of the filter element (9, 9') based on historical estimated flow rates of gas through the crankcase ventilation outlet (1).

6. The method (100) according to claim 5, wherein the historical estimated flow rates of gas are estimated during a time period comprising a number of operation cycles of the internal combustion engine (10).

7. The method (100) according to any one of the preceding claims, wherein the oil separator unit (7) is an oil mist separator.

8. A computer program comprising instructions which, when the program is executed by the control arrangement of claim 10, cause the control arrangement to carry out the method (100) according to any one of the claims 1 - 7.

9. A computer-readable medium (200) comprising instructions which, when executed by the control arrangement of claim 10, cause the control arrangement to carry out the method (100) according to any one of the claims 1 - 7.

10. A control arrangement (21) for estimating an operational aspect of an internal combustion engine (10), wherein the internal combustion engine (10) comprises:
- a crankcase (4) enclosing at least part of a crankcase volume (V),
- a crankcase ventilation outlet (1) connected to the crankcase volume (V), and
- a gas cleaning assembly (6) comprising an oil separator unit (7) and a pump unit (8) configured to pump gas from the crankcase volume (V) to the oil separator unit (7) via the crankcase ventilation outlet (1),
and wherein the control arrangement (21) is configured to:
- obtain data indicative of a pumping rate of gas pumped by the pump unit (8), and
- estimate the flow rate of gas through the crankcase ventilation outlet (1) based on the data, wherein the data is indicative of a pressure at an inlet (8') of the pump unit (8), and wherein the gas cleaning assembly (6) comprises a filter element (9, 9'), the pump unit (8) being arranged to pump gas through or against the filter element (9, 9'), and wherein the control arrangement (21) is configured to:
- estimate a clogging status of the filter element (9, 9') based on the estimated flow rate of gas through the crankcase ventilation outlet (1).

11. An internal combustion engine (10) comprising:
- a crankcase (4) enclosing at least part of a crankcase volume (V),
- a crankcase ventilation outlet (1) connected to the crankcase volume (V), and
- a gas cleaning assembly (6) comprising an oil separator unit (7) and a pump unit (8) configured to pump gas from the crankcase volume (V) to the oil separator unit (7) via the crankcase ventilation outlet (1),
and wherein the internal combustion engine (10) comprises a control arrangement (21) according to claim 10.

12. The internal combustion engine (10) according to claim 11, wherein an outlet (17) of the oil separator unit (7) is connected to an air inlet duct (19) of the internal combustion engine (10).

13. A vehicle (2) comprising an internal combustion engine (10) according to claim 11 or 12.

## Patentansprüche

1. Verfahren (100) zur Schätzung eines Betriebsaspekts eines Verbrennungsmotors (10), wobei der Verbrennungsmotor (10) umfasst:
- ein Kurbelgehäuse (4), das ein Kurbelgehäusevolumen (V) wenigstens teilweise einschließt,
- einen Kurbelgehäuse-Entlüftungsauslass (1), der mit dem Kurbelgehäusevolumen (V) verbunden ist, und
- eine Gasreinigungsanordnung (6), die eine Ölabscheidereinheit (7) und eine Pumpeneinheit (8) umfasst, die dazu ausgebildet ist, Gas aus dem Kurbelgehäusevolumen (V) über den Kurbelgehäuse-Entlüftungsauslass (1) zu der Ölabscheidereinheit (7) zu pumpen,
und wobei das Verfahren (100) folgende Schritte umfasst:
- Erhalten (110) von Daten, die eine Förderrate des von der Pumpeneinheit (8) geförderten Gases angeben, und
- Schätzen (120) des Gasvolumenstroms durch den Kurbelgehäuse-Entlüftungsauslass (1) anhand der Daten, wobei die Daten einen Druck an einem Einlass (8') der Pumpeneinheit (8) angeben und wobei die Gasreinigungsanordnung (6) ein Filterelement (9, 9') umfasst, wobei die Pumpeneinheit (8) dazu eingerichtet ist, Gas durch oder gegen das Filterelement (9, 9') zu pumpen, und wobei das Verfahren (100) folgenden Schritt umfasst:
- Schätzen (140) eines Verstopfungszustands des Filterelements (9, 9') anhand des geschätzten Gasvolumenstroms durch den Kurbelgehäuse-Entlüftungsauslass (1).

2. Verfahren (100) nach Anspruch 1, wobei die Pumpeneinheit (8) ein Pumpenelement (18) umfasst, um das Gas aus dem Kurbelgehäusevolumen (V) zu der Ölabscheidereinheit (7) zu pumpen, und wobei die Daten eine Betriebsrate des Pumpenelements (18) angeben.

3. Verfahren (100) nach einem der vorangehenden Ansprüche, wobei die Pumpeneinheit (8) ein Pumpenelement (18) umfasst, um das Gas aus dem Kurbelgehäusevolumen (V) zu der Ölabscheidereinheit (7) zu pumpen, sowie eine Stromquelle (11), um das Pumpenelement (18) mit Strom zu versorgen, und wobei der Schritt des Erhaltens (110) der Daten folgenden Schritt umfasst:
- Überwachen (112) einer Betriebsrate der Stromquelle (11).

4. Verfahren (100) nach einem der vorangehenden Ansprüche, wobei die Pumpeneinheit (8) ein Pumpenelement (18) umfasst, um das Gas aus dem Kurbelgehäusevolumen (V) zu der Ölabscheidereinheit (7) zu pumpen,
und wobei das Verfahren (100) folgende Schritte umfasst:
- Steuern (130) einer Betriebsrate des Pumpenelements (18), um einen Druck in dem Kurbelgehäusevolumen (V) unterhalb eines Schwellendrucks zu halten.

5. Verfahren (100) nach einem der vorangehenden Ansprüche, wobei das Verfahren (100) folgenden Schritt umfasst:
- Schätzen (142) eines Verstopfungszustands des Filterelements (9, 9') anhand historischer geschätzter Gasvolumenströme durch den Kurbelgehäuse-Entlüftungsauslass (1).

6. Verfahren (100) nach Anspruch 5, wobei die historischen geschätzten Gasvolumenströme in einem Zeitraum geschätzt werden, der etliche Betriebszyklen des Verbrennungsmotors (10) umfasst.

7. Verfahren (100) nach einem der vorangehenden Ansprüche, wobei es sich bei der Ölabscheidereinheit (7) um einen Ölnebelabscheider handelt.

8. Computerprogramm mit Befehlen, die, wenn das Programm von der Steueranordnung nach Anspruch 10 ausgeführt wird, die Steueranordnung dazu veranlassen, das Verfahren (100) nach einem der Ansprüche 1-7 auszuführen.

9. Computerlesbares Medium (200) mit Befehlen, die, wenn sie von der Steueranordnung nach Anspruch 10 ausgeführt werden, die Steueranordnung dazu veranlassen, das Verfahren (100) nach einem der Ansprüche 1-7 auszuführen.

10. Steueranordnung (21) zur Schätzung eines Betriebsaspekts eines Verbrennungsmotors (10), wobei der Verbrennungsmotor (10) umfasst:
- ein Kurbelgehäuse (4), das ein Kurbelgehäusevolumen (V) wenigstens teilweise einschließt,
- einen Kurbelgehäuse-Entlüftungsauslass (1), der mit dem Kurbelgehäusevolumen (V) verbunden ist, und
- eine Gasreinigungsanordnung (6), die eine Ölabscheidereinheit (7) und eine Pumpeneinheit (8) umfasst, die dazu ausgebildet ist, Gas aus dem Kurbelgehäusevolumen (V) über den Kurbelgehäuse-Entlüftungsauslass (1) zu der Ölabscheidereinheit (7) zu pumpen,
und wobei die Steueranordnung (21) ausgebildet ist zum:
- Erhalten von Daten, die eine Förderrate des von der Pumpeneinheit (8) geförderten Gases angeben, und
- Schätzen des Gasvolumenstroms durch den Kurbelgehäuse-Entlüftungsauslass (1) anhand der Daten, wobei die Daten einen Druck an einem Einlass (8') der Pumpeneinheit (8) angeben und wobei die Gasreinigungsanordnung (6) ein Filterelement (9, 9') umfasst, wobei die Pumpeneinheit (8) dazu eingerichtet ist, Gas durch oder gegen das Filterelement (9, 9') zu pumpen, und wobei die Steueranordnung (21) ausgebildet ist zum:
- Schätzen eines Verstopfungszustands des Filterelements (9, 9') anhand des geschätzten Gasvolumenstroms durch den Kurbelgehäuse-Entlüftungsauslass (1).

11. Verbrennungsmotor (10), der umfasst:
- ein Kurbelgehäuse (4), das ein Kurbelgehäusevolumen (V) wenigstens teilweise einschließt,
- einen Kurbelgehäuse-Entlüftungsauslass (1), der mit dem Kurbelgehäusevolumen (V) verbunden ist, und
- eine Gasreinigungsanordnung (6), die eine Ölabscheidereinheit (7) und eine Pumpeneinheit (8) umfasst, die dazu ausgebildet ist, Gas aus dem Kurbelgehäusevolumen (V) über den Kurbelgehäuse-Entlüftungsauslass (1) zu der Ölabscheidereinheit (7) zu pumpen,
und wobei der Verbrennungsmotor (10) eine Steueranordnung (21) nach Anspruch 10 umfasst.

12. Verbrennungsmotor (10) nach Anspruch 11, wobei ein Auslass (17) der Ölabscheidereinheit (7) mit einem Lufteinlasskanal (19) des Verbrennungsmotors (10) verbunden ist.

13. Fahrzeug (2) mit einem Verbrennungsmotor (10) nach Anspruch 11 oder 12.

## Revendications

1. Procédé (100) d'estimation d'un aspect fonctionnel d'un moteur à combustion interne (10), dans lequel le moteur à combustion interne (10) comprend :
- un carter de vilebrequin (4) enfermant au moins une partie d'un volume de carter de vilebrequin (V),
- une sortie de ventilation de carter de vilebrequin (1) raccordée au volume de carter de vilebrequin (V), et
- un ensemble d'épuration de gaz (6) comprenant une unité de séparateur d'huile (7) et une unité de pompe (8) configurée pour pomper du gaz depuis le volume de carter de vilebrequin (V) vers l'unité de séparateur d'huile (7) via la sortie de ventilation de carter de vilebrequin (1),
et dans lequel le procédé (100) comprend les étapes de :
- l'obtention (110) de données indicatives d'un taux de pompage de gaz pompés par l'unité de pompe (8), et
- l'estimation (120) du débit de gaz à travers la sortie de ventilation de carter de vilebrequin (1) sur la base des données, dans lequel les données sont indicatives d'une pression au niveau d'une entrée (8') de l'unité de pompe (8), et dans lequel l'ensemble d'épuration de gaz (6) comprend un élément de filtre (9, 9'), l'unité de pompe (8) étant agencée pour pomper du gaz à travers ou contre l'élément de filtre (9, 9'), et dans lequel le procédé (100) comprend l'étape de :
- l'estimation (140) d'un état de colmatage de l'élément de filtre (9, 9') sur la base du débit de gaz estimé à travers la sortie de ventilation de carter de vilebrequin (1).

2. Procédé (100) selon la revendication 1, dans lequel l'unité de pompe (8) comprend un organe de pompe (18) pour pomper les gaz depuis le volume de carter de vilebrequin (V) vers l'unité de séparateur d'huile (7), et dans lequel les données sont indicatives d'un taux de fonctionnement de l'organe de pompe (18).

3. Procédé (100) selon l'une quelconque des revendications précédentes, dans lequel l'unité de pompe (8) comprend un organe de pompe (18) pour pomper les gaz depuis le volume de carter de vilebrequin (V) vers l'unité de séparateur d'huile (7) et une source d'alimentation (11) pour alimenter l'organe de pompe (18), et dans lequel l'étape de l'obtention (110) des données comprend l'étape de :
- la surveillance (112) d'un taux de fonctionnement de la source d'alimentation (11).

4. Procédé (100) selon l'une quelconque des revendications précédentes, dans lequel l'unité de pompe (8) comprend un organe de pompe (18) pour pomper les gaz depuis le volume de carter de vilebrequin (V) vers l'unité de séparateur d'huile (7),
et dans lequel le procédé (100) comprend les étapes de :
- la commande (130) d'un taux de fonctionnement de l'organe de pompe (18) pour maintenir une pression dans le volume de carter de vilebrequin (V) en dessous d'une pression seuil.

5. Procédé (100) selon l'une quelconque des revendications précédentes, dans lequel le procédé (100) comprend l'étape de :
- l'estimation (142) d'un état de colmatage de l'élément de filtre (9, 9') sur la base de débits de gaz estimés historiques à travers la sortie de ventilation de carter de vilebrequin (1).

6. Procédé (100) selon la revendication 5, dans lequel les débits de gaz estimés historiques sont estimés pendant une période comprenant un certain nombre de cycles de fonctionnement du moteur à combustion interne (10).

7. Procédé (100) selon l'une quelconque des revendications précédentes, dans lequel l'unité de séparateur d'huile (7) est un séparateur de brouillard d'huile.

8. Programme d'ordinateur comprenant des instructions qui, lorsque le programme est exécuté par l'agencement de commande de la revendication 10, amènent l'agencement de commande à effectuer le procédé (100) selon l'un quelconque des revendication 1 à 7.

9. Support lisible par ordinateur (200) comprenant des instructions qui, lorsqu'il est exécuté par l'agencement de commande de la revendication 10, amènent l'agencement de commande à effectuer le procédé (100) selon l'une quelconque des revendications 1 à 7.

10. Agencement de commande (21) pour l'estimation d'un aspect fonctionnel d'un moteur à combustion interne (10), dans lequel le moteur à combustion interne (10) comprend :
- un carter de vilebrequin (4) enfermant au moins une partie d'un volume de carter de vilebrequin (V),
- une sortie de ventilation de carter de vilebrequin (1) raccordée au volume de carter de vilebrequin (V), et
- un ensemble d'épuration de gaz (6) comprenant une unité de séparateur d'huile (7) et une unité de pompe (8) configurée pour pomper du gaz depuis le volume de carter de vilebrequin (V) vers l'unité de séparateur d'huile (7) via la sortie de ventilation de carter de vilebrequin (1),
et dans lequel l'agencement de commande (21) est configuré pour :
- obtenir des données indicatives d'un taux de pompage de gaz pompés par l'unité de pompe (8), et
- estimer le débit de gaz à travers la sortie de ventilation de carter de vilebrequin (1) sur la base des données, dans lequel les données sont indicatives d'une pression au niveau d'une entrée (8') de l'unité de pompe (8), et dans lequel l'ensemble d'épuration de gaz (6) comprend un élément de filtre (9, 9'), l'unité de pompe (8) étant agencée pour pomper du gaz à travers ou contre l'élément de filtre (9, 9'), et dans lequel l'agencement de commande (21) est configuré pour :
- estimer un état de colmatage de l'élément de filtre (9, 9') sur la base du débit de gaz estimé à travers la sortie de ventilation de carter de vilebrequin (1).

11. Moteur à combustion interne (10) comprenant :
- un carter de vilebrequin (4) enfermant au moins une partie d'un volume de carter de vilebrequin (V),
- une sortie de ventilation de carter de vilebrequin (1) raccordée au volume de carter de vilebrequin (V), et
- un ensemble d'épuration de gaz (6) comprenant une unité de séparateur d'huile (7) et une unité de pompe (8) configurée pour pomper du gaz depuis le volume de carter de vilebrequin (V) vers l'unité de séparateur d'huile (7) via la sortie de ventilation de carter de vilebrequin (1),
et dans lequel le moteur à combustion interne (10) comprend un agencement de commande (21) selon la revendication 10.

12. Moteur à combustion interne (10) selon la revendication 11, dans lequel une sortie (17) de l'unité de séparateur d'huile (7) est raccordée à un conduit d'entrée d'air (19) du moteur à combustion interne (10).

13. Véhicule (2) comprenant un moteur à combustion interne (10) selon la revendication 11 ou 12.
